# EUROPÄISCHE PATENTANMELDUNG

(11) **EP 2 072 479 A1**
(43) Veröffentlichungstag der Anmeldung: **24.06.2009**
(21) Anmeldenummer: 07150261.1
(22) Anmeldetag: 20.12.2007
(51) Int. Cl.: C04B 24/04, C04B 28/02

(54) **Reaktivierung von verzögerten zementösen Systemen**

(71) Anmelder: Sika Technology AG, 6340 Baar (CH)
(72) Erfinder: Kurz, Christophe, 8107, Buchs (CH); Wombacher, Franz, 8916, Jonen (CH); Sulser, Ueli, 8103, Unterengstringen (CH)

(57) **Zusammenfassung**

Die vorliegende Erfindung betrifft eine verarbeitbare, verzögerte zementöse Zusammensetzung **Z** umfassend Zement, Wasser, mindestens einen Verzögerer **V1** und mindestens einen Beschleuniger **B,** wobei der Beschleuniger **B** mindestens 35 Gew.-% mindestens einer Säure **S** und/oder deren Salze umfasst, bezogen auf das Gesamtgewicht des Beschleunigers **B,** und wobei die Säure ausgewählt ist aus der Gruppe bestehend aus Ameisensäure, Essigsäure, Oxalsäure und Malonsäure.

## Beschreibung

### Technisches Gebiet

Die Erfindung betrifft das Gebiet der Reaktivierung von verzögerten zementösen Systemen. Insbesondere betrifft die vorliegende Erfindung eine verarbeitbare, verzögerte zementöse Zusammensetzung umfassend Zement, Wasser, mindestens einen Verzögerer und mindestens einen Beschleuniger, wobei der Beschleuniger mindestens 35 Gew.-% mindestens einer Säure und/oder deren Salze umfasst, bezogen auf das Gesamtgewicht des Beschleunigers, und wobei die Säure ausgewählt ist aus der Gruppe bestehend aus Ameisensäure, Essigsäure, Oxalsäure und Malonsäure. Zudem betrifft die Erfindung die Verwendung eines Beschleunigers zur Reaktivierung einer verzögerten zementösen Zusammensetzung sowie das Verfahren zur Beschleunigung des Erstarrens und Erhärtens von verzögerten zementösen Zusammensetzungen.

### Stand der Technik

Die Hydratation von hydraulisch abbindenden Systemen zu kontrollieren, ist eine der schwierigsten Aufgaben in der Bauchemie. Eine Möglichkeit, die Abbindezeit von hydraulischen Bindemitteln, insbesondere von Zement, zu kontrollieren, besteht in der kontrollierten Verzögerung von Zementmassen gefolgt von nachfolgender Aktivierung der Zementhydratation. Eine Hydratationskontrolle ist in einer Anzahl von verschiedenen Situationen nützlich, beispielsweise beim Zurückgewinnen von nicht verbrauchtem Beton, in Situationen worin Beton an einem entfernten Ort bereitet und nachfolgend zum Arbeitsort aus Gründen des Preises und/oder der Annehmlichkeit in einem abbindeverzögerten Zustand transportiert wird oder bei Spritzbetonanwendungen, wo lange Arbeitszeiten gefolgt von raschen Abbindezeiten verlangt sind.

Es wird einerseits eine ausreichende Verzögerung des Abbindens benötigt, um den Transport von der Produktion zur Verarbeitungsstätte zu gewährleisten, andererseits ist ein möglichst schnelles Erhärten nach dem Einbringen an der Verarbeitungsstätte erwünscht. Da jedoch die Verarbeitungszeitpunkte auf der Baustelle variieren, kann keine exakte Verzögerung auf den genauen Einbringzeitpunkt festgelegt werden. Durch die daher benötigte höhere Dosierung an Verzögerer wird die Erhärtung verlangsamt.

Die Hydratationskontrolle kann beispielsweise durch Verwendung von zwei verschiedenen Zusatzmitteln erreicht, einem Verzögerer, um das Abbinden zu verzögern und einem Beschleuniger oder Aktivator, um das Abbinden des Zementsystems zu einem gewünschten Zeitpunkt zu aktivieren.

Es sind viele Substanzen bekannt, welche das Abbinden und Erhärten von Beton beschleunigen. Gebräuchlich sind beispielsweise stark alkalisch reagierende Stoffe wie Alkalihydroxide, Alkalicarbonate, Alkalisilikate, Alkalialuminate und Erdalkalichloride. Bei den stark alkalisch reagierenden Stoffen können jedoch unerwünschte Belästigungen des Verarbeiters, wie Verätzungen, auftreten und sie reduzieren die Endfestigkeit und die Dauerhaftigkeit des Betons.

Aus US5629048 sind Abbindebeschleuniger für Zementzubereitungen bekannt, welche wasserlösliche Salze, insbesondere Alkalimetallsalze der Zitronen-, Apfel- oder Zitra-Apfelsäure umfassen. EP0402319B1 beschreibt eine Zementzubereitung umfassend einen Härtungsverzögerer, einen Härtungsbeschleuniger, ein Zementdispergiermittel und ein langsam freisetzendes Zementdispergiermittel, wobei der Härtungsbeschleuniger aus den Carbonaten von Alkali- und Erdalkalimetallen, Aluminaten von Alkali- und erdalkalimetallen, calziniertem Alaun und Calciumaluminat ausgewählt wird.

Aus US5427617A1 ist ein Verfahren zur Wiederaufbereitung von ungebrauchten Betonmischungen bekannt, wobei vor der Aushärtung des Betons ein Verzögerer zugegeben wird und am Ende der gewünschten Verzögererperiode ein Beschleuniger zugegeben wird, um die Betonmischung wieder in einen härtbaren Zustand zu versetzen. Der Beschleuniger besteht aus einer Verbindung der Gruppe von Calciumsalzen, Thiocyanaten, Triäthanolamin und Glycoluril.

US5634972 beschreibt eine Methode zur Hydratationskontrolle von Wasser-Zement Mischungen, bestehend aus der Zugabe eines verzögernden Anteils eines Neutralsalzes einer Monohydroxy di- oder multifunktionellen Carbonsäure zu Beginn des Vermischens und eines weiteren aktivierenden Anteils eines Neutralsalzes einer Monohydroxy di- oder multifunktionellen Carbonsäure, falls Aktivierung erwünscht wird. Die Carbonsäure ist ausgewählt aus der Gruppe bestehend aus Zitronensäure, Apfelsäure und 2-Methyl-Apfelsäure.

Die momentan bekannten Systeme, wo die Hydratation eines verzögerten Betons durch die Zugabe eines Abbindebeschleunigers beschleunigt wird, beziehen sich auf den Spritzbeton. Die bekannten Methoden zur Hydratationskontrolle haben den Nachteil, dass die Zementmischungen nach Zugabe des Beschleunigers sehr schnell abbinden. Das ist insbesondere bei der Anwendung als Spritzbeton meist auch erwünscht. Solche bekannten Systeme sind aber nicht geeignet, wenn die Zementmischung nach Aktivierung noch weiter verarbeitet werden muss. Bei den bekannten Systemen für die Spritzbetonanwendung ist eine weitere Verarbeitbarkeit nach der Aktivierung jedoch nicht gegeben. Weitere Nachteile der bekannten Abbinde- und Erhärtungsbeschleuniger sind zudem eine relativ geringe Frühfestigkeit in den ersten Stunden und Tagen und die ungenügende Stabilität der Lösung.

Es besteht also das Bedürfnis, eine schnell härtende Mörtel- oder Betonzusammensetzung bereitzustellen, welche zu einem beliebigen Zeitpunkt aktiviert und verarbeitet werden kann, welche eine hohe Frühfestigkeit aufweist und somit frühes Ausschalen ermöglicht.

### Darstellung der Erfindung

Der Erfindung liegt die Aufgabe zugrunde, eine verarbeitbare, verzögerte zementöse Zusammensetzung bereitzustellen, welche einen Abbinde- und Erhärtungsbeschleuniger umfasst, welcher einerseits das Abbinden beschleunigt, andererseits aber nach Zugabe zu einer Zement- oder Betonmischung die Weiterverarbeitbarkeit der Zement- oder Betonmischung für eine gewisse Zeit ermöglicht. Zudem ist erwünscht, mit dem Beschleuniger eine möglichst hohe Frühfestigkeit zu erzielen.

Erfindungsgemäss wird dies durch die Merkmale der unabhängigen Ansprüche erreicht.

Die Vorteile der Erfindung sind unter anderem darin zu sehen, dass die erfindungsgemässe Zusammensetzung **Z** nach der Aktivierung der Zement- oder Betonmischung mit dem Beschleuniger **B** verarbeitbar bleibt. Dieses ermöglicht es, einen lanzeitverzögerten Pumpbeton herzustellen, der vor Ort noch für eine maximal vordefiniert Zeit stehen gelassen werden kann. Auf Wunsch kann der Beton oder ein Teil des Betons aktiviert und anschliessend verwendet werden. Die Aktivierung bewirkt eine starke Abbindebeschleunigung, welche im Gegensatz zu nicht aktiviertem Beton zu massiv früheren Festigkeiten führt und beispielsweise auch ein früheres Ausschalen ermöglicht. Nach der Aktivierung des Betons bleibt aber, im Gegensatz zum Spritzbeton, die Verarbeitbarkeit für eine gewünschte Zeit vollständig erhalten.

Weitere vorteilhafte Ausgestaltungen der Erfindung ergeben sich aus der Beschreibung und den Unteransprüchen.

### Weg zur Ausführung der Erfindung

Die erfindungsgemässe verarbeitbare, verzögerte, zementöse Zusammensetzung **Z** umfasst (a) Zement, (b) Wasser, (c) mindestens einen Verzögerer **V1,** und (d) mindestens einen Beschleuniger **B,** wobei der Beschleuniger **B** mindestens 35 Gew.-% mindestens einer Säure **S** und/oder deren Salze umfasst, bezogen auf das Gesamtgewicht des Beschleunigers B, und wobei die Säure ausgewählt ist aus der Gruppe bestehend aus Ameisensäure, Essigsäure, Oxalsäure und Malonsäure.

Der Beschleuniger **B** enthält mindestens 35 Gew.-%, vorzugsweise mindestens 40 Gew.-%, noch mehr bevorzugt mehr als 50 Gew.-% mindestens einer Säure **S** und/oder deren Salze, wobei die Säure ausgewählt ist aus der Gruppe bestehend aus Ameisensäure, Essigsäure, Oxalsäure und Malonsäure. Besonders bevorzugt als Säure **S** und/oder deren Salze ist die Ameisensäure. Der Beschleuniger **B** kann auch mehrere verschiedene Säuren, mehrere verschiedene Säuresalze oder Säuren und Salze gemischt enthalten.

Vorzugsweise umfasst oder besteht der Verzögerer **V1** aus Zuckerderivaten, Phosphorsäurederivaten, Phosphonsäurederivaten und/oder Hydroxy- oder Polycarbonsäuren. Bevorzugte Verzögerer sind Phosphonsäurederivate, vorzugsweise solche mit Hydroxy- und Aminogruppen, die Calciumionen als Chelate binden können. Andere geeignete Verzögerer sind Hydroxycarbonsäuren und ihre Salze, wie Zitronen-, Glucon-, Wein-, Fumar-, Itacon-, Malon- und Glucoheptansäure; Polycarbonsäuren und ihre Salze, wie Polymalein-, Polyfumar-, Polyacryl- und Polymethacrylsäuren, vorzugsweise mit niedrigem Molekulargewicht; Kohlenhydrate, wie Zucker und Maissirup; sowie Lignosulfonate wie Calciumlignosulfonat. Hydroxycarbonsäuren sind von diesen bevorzugt. Ebenfalls geeignete Verzögerer sind Mischungen von mindestens einem Phosphonsäurederivat und mindestens einem anderen Verzögerer. Da viele der Verzögerer, die nicht zur Gruppe der Phosphonsäurederivate gehören, auch Wasser reduzierende Eigenschaften aufweisen, können diese auch die Druckfestigkeit des ausgehärteten Betons erhöhen.
Die Zugabe des Verzögerers **V1** zur zementösen Zusammensetzung bewirkt, dass die Offenzeit der zementösen Zusammensetzung, während der die zementöse Zusammensetzung verarbeitbar ist, bis zu 12 Stunden oder mehr betragen kann. Wird kein Beschleuniger **B** zur Zusammensetzung gegeben, findet der Abbindebeginn der zementösen Zusammensetzung je nach Art und Menge des zugegebenen Verzögerers erst nach 12 Stunden oder mehr statt.
Die zementöse Zusammensetzung **Z** umfasst vorzugsweise 0.01 bis **5** Gew.-% Verzögerer **V1** bezogen auf das Gewicht des Zementes.

Der geeignete Beschleuniger **B** umfasst 35 bis 100 Gew.-%, bevorzugt 40 bis 99.9 Gew.-%, insbesondere bevorzugt 51 bis 90 Gew.-% mindestens einer Säure **S** ausgewählt aus der Gruppe bestehend aus Ameisensäure, Essigsäure, Oxalsäure und Malonsäure und/oder deren Salze und 0 bis 15 Gew.-%, bevorzugt 0.1 bis 15 Gew.-%, insbesondere bevorzugt 0.5 bis 10 Gew.-% mindestens eines Verflüssigers, jeweils bezogen auf das Gesamtgewicht des Beschleunigers **B.**

Um die gewünschte Verarbeitbarkeit nach der Aktivierung mit einem Beschleuniger **B** zu erreichen, wird vorzugsweise je nach Bedarf einer oder mehrere Verflüssiger als Bestandteil des Beschleunigers **B** verwendet. Der Verflüssiger ist vorzugsweise in einer Menge von 0.1 - 15 Gew.-%, besonders bevorzugt von 0.5 bis 5 Gew.-%, bezogen auf das Gesamtgewicht des Beschleunigers, im Beschleuniger **B** enthalten. Als Verflüssiger sind beispielsweise Lignosulfonate, sulfonierte Naphthalin-Formaldehyd Kondensate, sulfonierte Melamin-Formaldehyd-Kondensate oder Polycarboxylatether (PCE) geeignet. Als Verflüssiger bevorzugt sind insbesondere Polycarboxylatverflüssiger, wie sie beispielsweise in der Betonchemie als Hochleistungsverflüssiger bekannt sind. Solche Polycarboxylatverflüssiger sind beispielsweise in EP 0 056 627 A2, EP 0 840 712 B1, EP 1 136 508 A1, EP 1 138 697 A1 oder EP 1 348 729 A1 beschrieben. Besonders bevorzugt sind Verflüssiger, welche nach der polymeranalogen Umsetzung hergestellt wurden, wie beispielsweise beschrieben in EP 1138 697 B1 oder EP 1348 729 A1. Es können auch mehrere verschiedene Verflüssiger verwendet werden, um die gewünschte Wirkung zu erzielen.

Um das Abbinden zu beschleunigen und die Abbindezeiten zu verringern kann der Beschleuniger **B** zusätzliche beschleunigende Substanzen wie beispielsweise Thiocyanate, Nitrate oder Aluminiumsalze, Säuren oder deren Salze, beispielsweise Oxalsäure, oder aminhaltige Substanzen wie Alkanolamine enthalten. Als zusätzliche beschleunigende Substanz insbesondere bevorzugt ist Alkanolamin, vorzugsweise in einer Menge von 0 - 40 Gew.-%, insbesondere bevorzugt in einer Menge von 5 bis 20 Gew.-%, bezogen auf das Gesamtgewicht des Beschleunigers. Als Alkanolamin wird beispielsweise Diethanolamin (DEA), Methyldiethanolamin (MDEA) oder Tris-(hydroxymethyl)-aminomethan (TRIS), vorzugsweise DEA, verwendet.
Die zusätzliche beschleunigende Substanz kann entweder im Beschleuniger **B** enthalten sein, gleichzeitig mit dem Beschleuniger **B** zur verzögerten zementösen Zusammensetzung **Z1** zugegeben werden, oder bereits beim Anmischen der verzögerten zementösen Zusammensetzung **Z1,** vorzugsweise mit dem Anmachwasser, zugegeben werden.

Der Beschleuniger kann auch aluminiumhaltige Verbindungen enthalten, wobei der Aluminiumgehalt vorzugsweise höchstens 1 Gew.-%, d.h. 0 bis 1 Gew.-%, bezogen auf das Gesamtgewicht des Beschleunigers **B** beträgt. Als aluminiumhaltige Verbindungen kommen beispielsweise Aluminiumsulfat oder Aluminiumhydroxid in Frage. Das typischerweise verwendete Aluminiumsulfat ist das Aluminiumsulfat-Tetradecahydrat (Al₂(SO₄)₃*14H₂O).
Das Molverhältnis von Aluminium zur organischen Säure **S** ist bevorzugt kleiner als 0.05. Insbesondere bevorzugt ist ein Molverhältnis von Aluminium zur organischen Säure von 0 bis 0.02.

Der Beschleuniger **B** kann auch weitere Bestandteile enthalten. Beispiele für weitere Bestandteile sind Lösungsmittel, insbesondere Wasser, oder Additive, wie weitere Verfüssiger, beispielsweise Lignosulfonate, sulfonierte Naphthalin-Formaldehyd Kondensate, sulfonierte Melamin-Formaldehyd-Kondensate oder Polycarboxylatether (PCE), weitere beschleunigende Substanzen wie beispielsweise Aluminiumsalze, Säuren oder deren Salze oder aminhaltige Substanzen wie Alkanolamine, Verzögerer, Schwindreduzierer, Entschäumer, oder Schaumbildner.

Der pH Wert des Beschleunigers **B** liegt vorzugsweise bei höchstens 4, bevorzugt im Bereich von 3 bis 4. Um den gewünschten pH Wert zu erreichen kann je nach Bedarf dem Beschleuniger **B** zusätzlich eine Base, insbesondere eine konjugierte Base dazugegeben werden oder die Menge der zugegebenen Säure **S** oder einer weiteren Säure oder des Alkanolamins angepasst werden. Geeignete Basen oder konjugierte Basen sind beispielsweise Natriumacetat oder Natriumhydroxid.

Die erfindungsgemässe verarbeitbare, verzögerte, zementöse Zusammensetzung **Z** kann neben Zement, Wasser, Verzögerer **V1** und dem mindestens einen Beschleuniger **B** weitere Bestandteile enthalten. Beispielsweise kann die Zusammensetzung neben Zement weitere Bindemittel enthalten wie beispielsweise Gips oder verschiedene Zemente, insbesondere Portlandzemente oder Tonerdeschmelzzemente und respektive deren Mischungen mit Flugaschen, Silica fume, Schlacke, Hüttensande und Kalksteinfiller oder gebrannter Kalk, ein latent hydraulisches Pulver oder ein inertes mikroskopisches Pulver. Zum Term "Gips" wird jede bekannte Form von Gips gezählt, insbesondere Calciumsulfat-α-Halbhydrat, Calciumsulfat-β-Halbhydrat oder Calciumsulfat-Anhydrit. Als Zement ist Portlandzement bevorzugt.
Unter "zementöse" Zusammensetzung wird eine Zusammensetzung verstanden, die als Zement mindestens 20 Gew.-%, bevorzugt mindestens 50 Gew.-% Portlandzement enthält, bezogen auf das Gesamtgewicht des Zements.

Die verarbeitbare, verzögerte, zementöse Zusammensetzung **Z1** ist, vor Zugabe des mindestens einen Beschleunigers **B,** vorzugsweise eine Mörtel- oder Betonzusammensetzung, insbesondere Transportmörtel oder Transportbeton.

Weiterhin kann die erfindungsgemässe verarbeitbare, verzögerte, zementöse Zusammensetzung **Z** weitere Zuschlagstoffe wie Sand, Kies, Steine, Quarzmehl, Kreiden sowie als Additive übliche Bestandteile wie Betonverfüssiger, beispielsweise Lignosulfonate, sulfonierte Naphthalin-Formaldehyd Kondensate, sulfonierte Melamin-Formaldehyd-Kondensate oder Polycarboxylatether (PCE), Beschleuniger, Korrosionsinhibitoren, Verzögerer, Schwindreduzierer, Entschäumer oder Schaumbildner enthalten. Als Verflüssiger sind insbesondere Polycarboxylatverflüssiger, wie sie beispielsweise in der Betonchemie als Hochleistungsverflüssiger bekannt sind, bevorzugt. Solche Polycarboxylatverflüssiger sind beispielsweise in EP 0 056 627 B1, EP 0 840 712 B1, EP 1 136 508 A1, EP 1 138 697 B1 oder EP 1 348 729 A1 beschrieben. Besonders bevorzugt sind Verflüssiger, welche nach der polymeranalogen Umsetzung hergestellt wurden, wie beispielsweise beschrieben in EP 1 138 697 B1 oder EP 1 348 729 A1.

Der Beschleuniger **B** wird bevorzugt in einer Menge von 1 bis 15 Gew.-%, vorzugsweise 2 bis 10 Gew.-%, insbesondere bevorzugt 2 bis 6 Gew.-%, bezogen auf das Gewicht des Zements verwendet, um die gewünschte aktivierende Wirkung zu erzielen. Es können auch mehrere Beschleuniger **B** gemischt, oder ein Beschleuniger **B** und anderen beschleunigenden Substanzen, verwendet werden, um die gewünschte Wirkung zu erzielen. Beispielsweise kann die zusätzlich zum Beschleuniger **B** verwendete beschleunigende Substanz zum gleichen Zeitpunkt wie der Beschleuniger **B** oder bereits beim Anmischen der zementösen verzögerten Zusammensetzung zugefügt werden. Als beschleunigende Substanzen kommen beispielsweise Thiocyanate, Nitrate oder Aluminiumsalze, Säuren oder deren Salze oder aminhaltige Substanzen wie Alkanolamine in Frage.

In einem weiteren Aspekt betrifft die vorliegende Erfindung ein Verfahren zur Herstellung einer verarbeitbaren, verzögerten, zementösen Zusammensetzung **Z,** wobei bei Bedarf zur Beschleunigung des Abbindens und Erhärtens einer verzögerten zementösen Zusammensetzung **Z1,** welche mindestens Wasser, Zement und mindestens einen Verzögerer V1 enthält, mindestens ein Beschleuniger **B** in fester oder flüssiger Form zugegeben wird. Der Beschleuniger **B** kann beispielsweise als Lösung, Dispersion oder pulverförmig vorliegen, wobei es bevorzugt ist, dass ein als Pulver vorliegender Beschleuniger vor der Anwendung in Wasser oder in einem anderen Lösungsmittel gelöst oder dispergiert wird. Das bevorzugte Lösungsmittel ist Wasser.

In einem weiteren Aspekt betrifft die vorliegende Erfindung ein Verfahren zur Beschleunigung des Abbindens und Erhärtens von verzögerten zementösen Zusammensetzungen **Z1,** wobei einem Gemisch, welches mindestens Wasser, Zement und mindestens einen Verzögerer **V1** enthält, ein Beschleuniger **B** in einer Menge von 1 bis 15 Gew.-%, vorzugsweise 2 bis 10 Gew.-%, insbesondere bevorzugt 2 bis 6 Gew.-%, bezogen auf das Gewicht des Zements zugegeben wird und wobei der Beschleuniger **B** mindestens 35 Gew.-% mindestens einer Säure S und/oder deren Salze umfasst, bezogen auf das Gesamtgewicht des Beschleunigers **B,** und wobei die Säure **S** ausgewählt ist aus der Gruppe bestehend aus Ameisensäure, Essigsäure, Oxalsäure und Malonsäure.

Weiterhin betrifft die vorliegende Erfindung die Verwendung eines Beschleunigers **B** zur Reaktivierung einer verzögerten zementösen Zusammensetzung **Z1** umfassend Wasser, Zement und mindestens einen Verzögerer **V1.** Der Beschleuniger **B** kann zur Beschleunigung des Abbindens und Erhärtens von zementösen Zusammensetzungen, Zement in Abmischung mit latent hydraulischen Bindemitteln oder inerten Füllstoffen, Mörtel oder Beton verwendet werden. Eine bevorzugte Verwendung erfolgt im Transportmörtel oder Transportbeton, wobei der Beschleuniger dem Mörtel oder Beton in der Förderleitung, im Fahrmischer oder der Spritzdüse, direkt in die Mischung zugegeben resp. zudosiert wird. Vorzugsweise wird ein Beschleuniger in Form einer Lösung oder Dispersion mit einem Flüssigdosiergerät zudosiert, ein pulverförmiger Beschleuniger mit einem Pulverdosiergerät. Die Zudosierung des Beschleunigers **B** zur verzögerten zementösen Zusammensetzung **Z1** erfolgt bei Bedarf, beispielsweise nach 0.5 bis 72 Stunden, vorzugsweise nach 1 bis 48 Stunden, nach Herstellung der verzögerten zementösen Zusammensetzung **Z1.**

Die verzögerte zementöse Zusammensetzung **Z1** ist vorzugsweise Transportmörtel oder -beton und ist nach Reaktivierung mit dem Beschleuniger **B** mindestens **15** Minuten, noch mehr bevorzugt mindestens 30 Minuten verarbeitbar.

Unter "verarbeitbar" wird im ganzen vorliegenden Text verstanden, dass die zementöse Zusammensetzung noch verformt, beispielsweise gegossen oder gepumpt, werden kann.

Mit der vorliegenden Erfindung wird eine kontrollierte Aktivierung einer verzögerten Zusammensetzung ermöglicht und der Transportmörtel oder - beton kann über einen bestimmten Zeitpunkt transportiert und bei Bedarf, beispielsweise nach 0.5 bis 72 Stunden, vorzugsweise nach 1 bis 48 Stunden, nach Herstellung der verzögerten zementösen Zusammensetzung **Z1,** mit dem Beschleuniger **B** aktiviert werden.

Die erfindungsgemässe verarbeitbare, verzögerte, zementöse Zusammensetzung **Z** weist also verglichen mit herkömmlichen verzögerten Zusammensetzungen, welche mit einem Beschleuniger versetzt wurden, auch nach der Zugabe des Beschleunigers **B** eine gute Verarbeitbarkeit über eine längere Zeit, vorzugsweise mindestens 30 Minuten, auf. Zusätzlich werden mit den erfindungsgemässen Zusammensetzungen **Z** hervorragende Frühfestigkeitswerte erreicht. Dies ist besonders auf Baustellen erwünscht, wo der Zeitpunkt der Aktivierung im voraus nicht genau definiert werden kann weil aus logistischen, technischen oder marktwirtschaftlichen Gründen die angerührte Zementmasse über längere Zeit transportiert werden muss, bei Bedarf die Aktivierung aber sofort erwünscht ist und wo nach relativ kurzer Zeit, vorzugsweise nach fünf bis sechs Stunden nach Aktivierung, die verarbeitete zementöse Zusammensetzung begehbar oder belastbar sein muss.

### Ausführungsbeispiele

Es wurden mehrere Proben des Beschleunigers **B** gemäss den in Tabelle 1 angegeben Werten hergestellt, wobei als Säure **S** 85%-ige Ameisensäure (HCOOH), als Alkanolamin 90%-iges Diethanolamin (DEA), als Aluminiumsulfat Al₂(SO₄)₃*14H₂O, und als Natriumacetat das Na-acetat-trihydrat (Na-acetat) (alle erhältlich beispielsweise bei Fluka, Schweiz) verwendet wurde. Als Verflüssiger wurde eine Mischung von zwei verschiedenen Polycarboxylatverflüssigern (hier Sika®ViscoCrete®-225 und Sika®ViscoCrete® 30 HE, beide erhältlich bei Sika Deutschland GmbH) verwendet, wobei die zwei verschiedenen Polycarboxylatverflüssiger je zur Hälfte im Verflüssiger vorliegen.
Die Mengenangaben in Tabelle 1 sind Gew.-% bezogen auf den Beschleuniger **B.**

**Tabelle 1: Beschleunigerzusammensetzung in Gew.-% bezogen auf das Gesamtgewicht des Beschleunigers B**

| Nr. | HCOOH | DEA | MDEA | TRIS | Na-acetat | NaOH | Milchsäure | Al₂(SO₄)₃ *14H₂O | Verflüssiger |
|---|---|---|---|---|---|---|---|---|---|
| **B1** | 72 | 15 | | | 10 | | | | 3 |
| **B2** | 70.7 | 8.84 | | | 10.1 | 1.77 | | 5.05 | 3.54 |

Zur Herstellung des Beschleunigers **B** wurde die Ameisensäure vorgelegt, das Na-acetat-trihydrat zugefügt und gelöst, das Aluminiumsulfat und gegebenenfalls die Milchsäure und das Natriumhydroxid darin gelöst, anschliessend das Alkanolamin und danach die zwei Verflüssiger zugegeben. Je nach Bedarf wurde der Beschleuniger **B** nachträglich mit Wasser verdünnt. Der pH Wert des Beschleunigers **B** ist etwa 3.

### 2. Mörtel- und Betonversuche

Die Wirksamkeit der Beschleuniger B wurde im Mörtel und Beton getestet.

| Zusammensetzung der Mörtelmischung **(MM):** (Grösstkorn 8mm) | Menge |
|---|---|
| Portlandzement (Schweizer CEM II/A-D 52.5 R) | 530 g |
| Kalksteinfiller | 150 g |
| Sand 0-1 mm | 525 g |
| Sand 1-4 mm | 840 g |
| Kies 4-8 mm | 590 g |

| Zusammensetzung der Betonmischung **(BM):** (Grösstkorn 32mm) | Menge |
|---|---|
| Portlandzement (Schweizer CEM II/A-D 52.5 R) | 750 g |
| Kalksteinfiller | 180 g |
| Sand 0-1 mm | 1440 g |
| Sand 1-4 mm | 828 g |
| Kies 4-8 mm | 0 g |
| Kies 8-16 mm | 540 g |
| Kies 16-32 mm | 612 g |

Die Sande, Kies, der Filler und der Zement wurden 1 Minute in einem Hobart-Mischer trocken gemischt. Innerhalb von 30 Sekunden wurde das Anmachwasser, in dem Verzögerer sowie gegebenenfalls Verflüssiger und die zusätzlich beschleunigende Komponente enthalten waren, zugegeben und noch weitere 2.5 Minuten gemischt. Die Gesamt-Mischzeit nass war 3 Minuten. Der Wasser/Zement-Wert (w/z-Wert) betrug zwischen 0.39 und 0.47.
Als Vergzögerer wurde ein Phosphonsäurederivat (Cublen® E3115, erhältlich bei Zschimmer & Schwarz, Deutschland oder PNF-56/25, erhältlich bei Giovanni Bozzetto S.p.A) oder ein Zuckerderivat (Glucidex®, erhältlich bei Roquette, Frankreich) verwendet.
Als Verflüssiger wurde eine Mischung von zwei verschiedenen Polycarboxylatverflüssigern (hier 62 Gew.-% von Sika®ViscoCrete®-3088, erhältlich bei Sika Schweiz AG und 38 Gew.-% von Sika®ViscoCrete®-25, erhältlich bei Sika Deutschland GmbH) verwendet.

Zur Mörtel- (MM) oder Betonmischung (BM) wird gegebenenfalls als zusätzliche beschleunigende Komponente eine 50%-ige wässrige Lösung von Natriumthiocyanat (NaSCN) zugegeben.

**Tabelle 2: Verschiedene Mörtel- (MM) oder Betonmischungen (BM) nach Zugabe des Beschleunigers B. Die %-Angaben sind Gew.-% bezogen auf das Gesamtgewicht des Zements.**

| Nr. | Verflüssiger | Verzögerer | Beschleuniger B | NaSCN | w/z |
|---|---|---|---|---|---|
| **BM1** | 1 % | 0.15 %Glucidex® | 4 % **B1** | 0.2 % | 0.47 |
| **BM2** | 1 % | 0.25 % Cublen® | 4 % **B1** | 0.2 % | 0.46 |
| **MM1** | 1 % | 0.83 % PNF-56/25 | 3.9 % **B1** | | 0.42 |
| **MM2** | 1 % | 0.83 % PNF-56/25 | 3.8 % **B1** | 0.2 % | 0.42 |
| **MM3** | 1 % | 0.83 % PNF-56/25 | 3.8% **B1** | 0.2 % | 0.42 |
| **MM4** | 1 % | 0.25 % Cublen® | 3.8 % **B1** | 0.2 % | 0.45 |
| **MM5** | 1.4 % | 0.3 % Cublen® | 4 % **B2** | | 0.39 |
| **MM6** | 1.4 % | 0.3 % Cublen® | 4 % **B2** | | 0.47 |

Die Beschleuniger **B1** und **B2** wurden bei gewünschter Aktivierung in einer Menge von etwa 4 Gew.-% bezogen auf den Zement zur Mörtel- oder Betonmischung zugegeben.

Zur Bestimmung der Wirksamkeit der Beschleuniger **B** wurden die verzögerten Mörtelmischungen **MM** oder die verzögerten Betonmischungen **BM** zu verschiedenen Zeitpunkten nach der Herstellung mit den Beschleunigern **B1** oder **B2** aktiviert, und das Ausbreitmass (ABM) (Tabelle 3) sowie die Druckfestigkeit (Tabelle 4) bestimmt. Die Beispiele wurden mit Mörtelmischungen, welche mit einem allgemeinen Beschleuniger aus Zitronensäure **C1** (Dosierung 6 Gew.-% bezogen auf den Zement) und einem herkömmlichen Spritzbetonbeschleuniger **C2** (Sigunit®-L53 AF, erhältlich bei Sika Schweiz AG) aktiviert wurden, verglichen.

**Tabelle 3: Ausbreitmass (ABM) in mm nach 0, 30, und 60 Minuten (min) nach Aktivierung von Mörtel- (MM) oder Betonmischungen (BM), die nach 1, 6, 10 Stunden (h) nach der Herstellung aktiviert wurden; n.v. bedeutet nicht verarbeitbar da bereits steif**

| Nr. | **BM** oder **MM** | Aktivierung nach h | ABM vor Aktivierung | ABM 0 min nach Akt. | ABM nach 30 min | ABM nach 60 min |
|---|---|---|---|---|---|---|
| 1 | **BM1** | 10 | 560 | 590 | 550 | 510 |
| 2 | **BM2** | 1 | 610 | 580 | 590 | 580 |
| 3 | **MM1** | 1 | 202 | 193 | 200 | 189 |
| 4 | **MM2** | 10 | 182 | 177 | 163 | 145 |
| 5 | **MM3** | 1 | 199 | 192 | 215 | 208 |
| 6 | **MM4** | 6 | 233 | 212 | 201 | 191 |
| 11 | **MM5** | 6 | 196 | 187 | 152 | 139 |
| 12 | **MM6** | 10 | 195 | 192 | 168 | 140 |
| 13 | **C1** | 6 | | n.v. | n.v | n.v |
| 14 | **C2** | 6 | | n.v | n.v | n.v |

Das Ausbreitmass (ABM) des Mörtels wurde gemäss EN 1015-3 bestimmt.

Tabelle 3 zeigt in den Beispielen 4 bis 6, dass eine verzögerte Mörtelmischung (**MM2, MM3** und **MM4**) jederzeit innerhalb von 1 bis 10 Stunden mit dem Beschleuniger **B1** aktivierbar ist. Zudem ist sehr schön ersichtlich, dass die Zusammensetzung, welche mit den Beschleunigern **B1** und **B2** aktiviert wurde, nach 30 Minuten und meist auch noch nach 60 Minuten verarbeitbar ist. Als verarbeitbar wird hier bezeichnet, wenn das Ausbreitmass (ABM) einen Wert von 150 mm oder mehr aufweist. Bei den Vergleichsbeispielen **C1** und **C2** ist der Mörtel bereits nach Einmischen des Beschleunigers **C1** bzw. **C2** so steif, dass er nicht mehr verarbeitbar ist.

Die Prüfung zur Bestimmung der Druckfestigkeit erfolgte mit den Mörtelmischungen **MM** an Prismen (40 x 40 x 160mm) und mit den Betonmischungen **BM** an Würfel (120x120x120mm) nach 6 Stunden, 7 Stunden und 8 Stunden (siehe Tabelle 4).

**Tabelle 4: Druckfestigkeiten in N/mm² nach 6, 7 und 8 Stunden (h) nach Aktivierung.**

| Nr. | **BM** oder **MM** | 6 h | 7 h | 8 h |
|---|---|---|---|---|
| 1 | **BM1** | 1.2 | 2.9 | 6 |
| 2 | **BM2** | | 1.1 | 2.1 |
| 4 | **MM2** | 4.1 | 9 | |
| 5 | **MM3** | 1.8 | 4.6 | |
| 6 | **MM4** | 3 | 4.9 | |
| 11 | **MM5** | 6.9 | 11.7 | |
| 12 | **MM6** | 4.5 | 6.9 | |
| 13 | **C1** | | | |
| 14 | **C2** | | | |

Tabelle 4 zeigt, dass die Mörtelzusammensetzungen, welche mit den Beschleunigern **B1** und **B2** aktiviert wurden eine sehr gute Frühfestigkeit aufweisen. Als gute Resultate werden insbesondere diejenigen angesehen, welche 7 Stunden nach der Aktivierung eine Druckfestigkeit von 4 N/mm² oder mehr aufweisen. Als ausgezeichnet werden diejenigen Resultate bezeichnet, die bereits nach 6 Stunden eine Druckfestigkeit von 2 N/mm² oder mehr aufweisen, gleichzeitig aber nach 30 Minuten und vorzugsweise auch noch nach 60 Minuten verarbeitbar sind. Besonders gute Resultate wurden daher mit den Beispielen **MM2** und **MM4,** d.h. mit dem Beschleuniger **B1** erreicht. Da bei den Vergleichsbeispielen **C1** und **C2** der Mörtel bereits nach Einmischen des Beschleunigers **C1** bzw. **C2** so steif war, dass er nicht mehr verarbeitbar war, konnten keine Prismen gegossen werden und die Druckfestigkeit konnte nicht bestimmt werden.

Selbstverständlich ist die Erfindung nicht auf die gezeigten und beschriebenen Ausführungsbeispiele beschränkt.

## Patentansprüche

1. Verarbeitbare, verzögerte, zemetöse Zusammensetzung Z umfassend
(a) Zement,
(b) Wasser,
(c) mindestens einen Verzögerer **V1,** und
(d) mindestens einen Beschleuniger **B,**
wobei der Beschleuniger **B** mindestens 35 Gew.-% mindestens einer Säure **S** und/oder deren Salze umfasst, bezogen auf das Gesamtgewicht des Beschleunigers **B,** und wobei die Säure ausgewählt ist aus der Gruppe bestehend aus Ameisensäure, Essigsäure, Oxalsäure und Malonsäure.

2. Zusammensetzung **Z** nach Anspruch 1, **dadurch gekennzeichnet, dass** der Beschleuniger **B** 35 bis 99.9 Gew.-% mindestens einer Säure **S** ausgewählt aus der Gruppe bestehend aus Ameisensäure, Essigsäure, Oxalsäure und Malonsäure und/oder deren Salze, 0 bis 1 Gew.-% Aluminiumgehalt, 0.1 bis 15 Gew.-% mindestens eines Verflüssigers und 0 bis 40 Gew.-% mindestens eines Alkanolamins umfasst, jeweils bezogen auf das Gesamtgewicht des Beschleunigers **B.**

3. Zusammensetzung **Z** nach Anspruch 2, **dadurch gekennzeichnet, dass** der Beschleuniger **B** 51 bis 90 Gew.-% mindestens einer Säure **S,** ausgewählt aus der Gruppe bestehend aus Ameisensäure, Essigsäure, Oxalsäure und Malonsäure und/oder deren Salze, 0 bis 1 Gew.-% Aluminiumgehalt, 0.5 bis 10 Gew.-% mindestens eines Verflüssigers und 5 bis 20 Gew.-% mindestens eines Alkanolamins umfasst, bezogen auf das Gesamtgewicht des Beschleunigers **B.**

4. Zusammensetzung **Z** nach einem der vorhergehenden Ansprüche, **dadurch gekennzeichnet, dass** die Säure **S** Ameisensäure ist.

5. Zusammensetzung **Z** nach einem der vorhergehenden Ansprüche, **dadurch gekennzeichnet, dass** der pH Wert des Beschleunigers **B** höchstens bei 4, bevorzugt im Bereich von 3 bis 4, liegt.

6. Zusammensetzung **Z** nach einem der Ansprüche 2 bis 5, **dadurch gekennzeichnet, dass** der Verflüssiger im Beschleuniger **B** mindestens ein Polycarboxylat-Verflüssiger umfasst oder daraus besteht.

7. Zusammensetzung **Z** nach einem der vorhergehenden Ansprüche, **dadurch gekennzeichnet, dass** der Verzögerer **V1** Zuckerderivate, Phosphorsäurederivate, Phosphonsäurederivate und/oder Hydroxy- oder Polycarbonsäure umfasst oder daraus besteht.

8. Verwendung eines Beschleunigers **B** zur Reaktivierung einer verzögerten zementöse Zusammensetzung **Z1** umfassend Wasser, Zement und mindestens einen Verzögerer **V1, dadurch gekennzeichnet, dass** der Beschleuniger **B** mindestens 35 Gew.-% mindestens einer Säure **S** und/oder deren Salze umfasst, bezogen auf das Gesamtgewicht des Beschleunigers **B,** und wobei die Säure **S** ausgewählt ist aus der Gruppe bestehend aus Ameisensäure, Essigsäure, Oxalsäure und Malonsäure.

9. Verwendung eines Beschleunigers **B** nach Anspruch 8, **dadurch gekennzeichnet, dass** der Beschleuniger **B** 35 bis 99.9 Gew.-% mindestens einer Säure **S,** ausgewählt aus der Gruppe bestehend aus Ameisensäure, Essigsäure, Oxalsäure und Malonsäure, und/oder deren Salze, 0 bis 1 Gew.-% Aluminiumgehalt, 0.1 bis 15 Gew.-% mindestens eines Verflüssigers und 0 bis 40 Gew.-% mindestens eines Alkanolamins umfasst, bezogen auf das Gesamtgewicht des Beschleunigers **B.**

10. Verwendung eines Beschleunigers **B** nach Anspruch 9, **dadurch gekennzeichnet, dass** der Beschleuniger **B** 51 bis 90 Gew.-% mindestens einer Säure **S,** ausgewählt aus der Gruppe bestehend aus Ameisensäure, Essigsäure, Oxalsäure und Malonsäure, und/oder deren Salze, 0 bis 1 Gew.-% Aluminiumgehalt, 0.5 bis 10 Gew.-% mindestens eines Verflüssigers und 5 bis 20 Gew.-% mindestens eines Alkanolamins umfasst, bezogen auf das Gesamtgewicht des Beschleunigers **B.**

11. Verwendung eines Beschleunigers B nach einem der Ansprüche 8 bis 10, **dadurch gekennzeichnet, dass** die Säure **S** Ameisensäure ist.

12. Verwendung eines Beschleunigers **B** nach einem der Ansprüche 8 bis 11, **dadurch gekennzeichnet, dass** der pH Wert des Beschleunigers höchstens bei 4, bevorzugt im Bereich von 3 bis 4, liegt.

13. Verwendung eines Beschleunigers **B** nach einem der Ansprüche 8 bis 12, **dadurch gekennzeichnet, dass** der Verflüssiger im Beschleuniger **B** mindestens ein Polycarboxylat-Verflüssiger umfasst oder daraus besteht.

14. Verwendung eines Beschleunigers **B** nach einem der Ansprüche 8 bis 13, **dadurch gekennzeichnet, dass** die verzögerte zementöse Zusammensetzung **Z1** Transportmörtel oder -beton ist.

15. Verwendung nach einem der Ansprüche 8 bis 14, **dadurch gekennzeichnet, dass** nach Reaktivierung mit dem Beschleuniger **B** die Zusammensetzung **Z** mindestens 15 Minuten verarbeitbar ist.

16. Verfahren zur Beschleunigung des Erstarrens und Erhärtens von verzögerten zementösen Zusammensetzungen **Z1, dadurch gekennzeichnet, dass** einem Gemisch, welches mindestens Wasser, Zement und mindestens einen Verzögerer **V1** enthält, ein Beschleuniger **B** in einer Menge von 1 bis 15 Gew.-%, vorzugsweise 2 bis 5 Gew.-%, bezogen auf das Gewicht des Zements zugegeben wird und wobei der Beschleuniger **B** mindestens 35 Gew.-% mindestens einer Säure **S** und/oder deren Salze umfasst, bezogen auf das Gesamtgewicht des Beschleunigers **B,** und wobei die Säure **S** ausgewählt ist aus der Gruppe bestehend aus Ameisensäure, Essigsäure, Oxalsäure und Malonsäure.

17. Verfahren nach Anspruch 16, **dadurch gekennzeichnet, dass** der Beschleuniger **B** 35 bis 99.9 Gew.-% mindestens einer Säure **S,** ausgewählt aus der Gruppe bestehend aus Ameisensäure, Essigsäure, Oxalsäure und Malonsäure, und/oder deren Salze, 0 bis 1 Gew.-% Aluminiumgehalt, 0.1 bis 15 Gew.-% mindestens eines Verflüssigers und 0 bis 40 Gew.-% mindestens eines Alkanolamins umfasst, bezogen auf das Gesamtgewicht des Beschleunigers **B.**

18. Verfahren nach einem der Ansprüche 16 oder 17, **dadurch gekennzeichnet, dass** die Säure **S** Ameisensäure ist.
